(19) Europäisches Patentamt / European Patent Office / Office européen des brevets

(11) **EP 3 833 474 B1**

(12) **EUROPÄISCHE PATENTSCHRIFT**

(45) Veröffentlichungstag und Bekanntmachung des Hinweises auf die Patenterteilung:
**04.09.2024   Patentblatt 2024/36**

(21) Anmeldenummer: **19746503.2**

(22) Anmeldetag: **06.08.2019**

(51) Internationale Patentklassifikation (IPC):
**B01J 27/26** (2006.01)    **C01C 3/11** (2006.01)
**C08G 65/26** (2006.01)

(52) Gemeinsame Patentklassifikation (CPC):
**C08G 65/2663; B01J 27/26; C01C 3/11**

(86) Internationale Anmeldenummer:
**PCT/EP2019/071074**

(87) Internationale Veröffentlichungsnummer:
**WO 2020/030617 (13.02.2020 Gazette 2020/07)**

(54) **VERFAHREN ZUR HERSTELLUNG VON DOPPELMETALLCYANID-KATALYSATOREN**

METHOD FOR THE PRODUCTION OF DOUBLE METAL CYANIDE CATALYSTS

PROCÉDÉ DE FABRICATION DE CATALYSEURS AU CYANURE MÉTALLIQUE DOUBLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.08.2018   EP 18187896**

(43) Veröffentlichungstag der Anmeldung:
**16.06.2021   Patentblatt 2021/24**

(73) Patentinhaber: **Covestro Deutschland AG**
**51373 Leverkusen (DE)**

(72) Erfinder:
• **HOFMANN, Jörg**
  **47800 Krefeld (DE)**
• **GLEIXNER, Maria-Theresa**
  **47906 Kempen (DE)**
• **ASMA, Thomas**
  **47918 Tönisvorst (DE)**

(74) Vertreter: **Levpat**
**c/o Covestro AG**
**Gebäude 4825**
**51365 Leverkusen (DE)**

(56) Entgegenhaltungen:
**WO-A1-01/39883        WO-A1-01/80994**
**WO-A1-2011/144523**

**Beschreibung**

Die vorliegende Erfindung betrifft ein verbessertes Verfahren zur Herstellung von Doppelmetall¬cyanid (DMC)-Katalysatoren für die Herstellung von Polyoxyalkylenpolyolen, bevorzugt Polyetherpolyolen und/oder Polyethercarbonatpolyolen. Ein weiterer Gegenstand sind DMC-Katalysatoren, welche erhältlich über dieses Verfahren sind sowie die Verwendung der erfindungsgemäßen Katalysatoren zur Herstellung von Polyoxyalkylenpolyolen.

DMC-Katalysatoren sind im Prinzip aus dem Stand der Technik bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen eine sehr hohe Aktivität in der Homopolymerisation von Epoxiden und ermöglichen die Herstellung von Polyetherpolyolen bei sehr geringen Katalysatorkonzentrationen (25 ppm oder weniger), so dass eine Abtrennung des Katalysators aus dem fertigen Produkt i.a. nicht mehr erforderlich ist. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert.-Butanol) noch einen Polyether mit einem zahlenmittlerem Molekulargewicht größer als 500 g/mol enthalten.

In WO 01/39883 A1 wird ein Verfahren zur Herstellung von Doppelmetall¬cyanid(DMC)-Katalysatoren für die Herstellung von Polyetherpolyolen durch Poly¬addition von Alkylenoxiden an aktive Wasserstoffatome aufweisende Starterverbin¬dungen offenbart, bei dem die Herstellung der DMC-Katalysatordispersion unter Einsatz einer Mischdüse, bevorzugt eines Strahldispergators erfolgt. Die so hergestellten DMC-Katalysatoren besitzen bei der Polyetherpolyol-Herstellung erhöhte Aktivität, reduzierte Teilchengröße und engere Teilchengrößenverteilung.

In WO 01/80994 A1 wird ebenfalls ein Verfahren zur Herstellung von Doppelmetallcyanid (DMC)-Katalysatoren offenbart, bei dem zunächst wässrige Lösungen eines Metallsalzes und eines Metall¬cyanid¬salzes in Gegenwart eines organischen Komplexliganden und ggf. einer oder mehrerer weiterer komplexbildender Komponenten unter Bildung einer DMC-Katalysatordispersion umgesetzt werden, diese Dispersion dann filtriert, der Filter-kuchen anschließend mit einer oder mehreren, wässrigen oder nichtwässrigen Lösungen des organischen Komplexliganden und ggf. einer oder mehreren weiteren komplex-bildenden Komponenten durch Filterkuchenwäsche gewaschen wird und der gewaschene Filterkuchen abschließend nach einem optionalen Auspressen bzw. mechanischen Entfeuchten getrocknet wird. Das offenbarte Verfahren verkürzt die Zeit für die Katalysatorherstellung, wobei die resultierenden Katalysatoren vergleichbare Aktivitäten in der Herstellung von Polyetherpolyolen im Vergleich zu Referenzkatalysatoren besitzen.

WO 2011/144523 A1 offenbart Polyethercarbonatpolyole aus einer oder mehreren H-funktionellen Startsubstanzen, einem oder mehreren Alkylenoxiden und Kohlendioxid in Gegenwart mindestens eines Doppelmetallcyanid-Katalysators, wobei das zur Herstellung des Doppelmetallcyanid-Katalysators eingesetzte cyanidfreie Metallsalz, Metallcyanidsalz oder beide genannten Salze in Gegenwart definierter Mengen von alkalischen Verbindungen umgesetzt wird. Diese DMC-Katalysatoren führen zu einer verbesserten Selektivität zugunsten der Bildung von linearen Polyethercarbonatpolyolen.

EP 700 949 A2 beschreibt einen DMC-Katalysator, enthaltend DMC-Verbindung, einen organischen Komplexliganden und 5 - 80 Gew.-% eines Polyethers mit einem zahlenmittleren Molekulargewicht > 500 g/mol, wobei die Herstellung der DMC-Katalysatordispersion bei Raumtemperatur erfolgt. Die verwendeten Katalysatoren besitzen grundsätzlich eine Aktivität in der Herstellung von Polyetherpolyolen.

Die Relevanz der Temperatureinstellung/-kontrolle bei der Herstellung der DMC-Dispersion und deren Einfluss auf die DMC-Katalysatoraktivität für die Bildung von Polyoxyalkylenpolyolen ist im Stand der Technik nicht offenbart.

Aufgabe der vorliegenden Anmeldung war es, ein verbessertes Verfahren zur Herstellung von Doppelmetallcyanid (DMC)-Katalysatoren mit weiter erhöhter katalytischer Aktivität in der Herstellung von Polyoxyalkylenpolyolen, bevorzugt Polyetherpolyolen und/oder Polyethercarbonatpolyolen, bereitzustellen, wobei diese verbesserte Aktivität beispielsweise bei der Katalysatortestung gemäß des "8K Diol Stressed Tests", der z.B. in WO 98/16310 A1 beschrieben wird, zu einer reduzierten Produktviskosität führt. Ziel war es somit katalytisch aktivere DMC Katalysatoren bereitzustellen, welche zu Polyoxyalkylenpolyolen, bevorzugt Polyetherpolyolen und/oder Polyethercarbonatpolyolen, mit einer reduzierten Viskosität führen, was die weitere Verarbeitbarkeit der Polyoxyalkylenpolyole in der nachfolgenden Polyurethanisierungsreaktion erleichtert. Die erhöhte Katalysatoraktivität ermöglicht außerdem die Reduktion der eingesetzten Katalysatormenge, was die Wirtschaftlichkeit des Prozesses verbessert.

Gleichzeitig soll der Herstellungsprozess der DMC-Katalysatordispersion mit einem vergleichbar einfachen apparativen Aufbau, einem niedrigen Energieaufwand bei der Scherung, einer guten Temperaturkontrolle, sowie einer ebenfalls guten Aufskalierbarkeit gegenüber bekannten technischen Verfahren erfolgen, um eine einfache Implementierung in bestehende DMC-Katalysator-Herstellungsverfahren, beispielsweise in Schlaufenreaktion zu ermöglichen.

Überraschenderweise wurde nun gefunden, dass ein Verfahren zur Herstellung eines Doppelmetallcyanid-Katalysators (DMC) umfassend

i) in einem ersten Schritt die Umsetzung einer wässrigen Lösung eines cyanidfreien Metallsalzes, einer wässrigen Lösung eines Metallcyanidsalzes, eines organischen Komplexliganden sowie einer komplexbildenden Komponente unter Bildung einer Dispersion;

wobei die komplexbildende Komponente ein Polyether ist;
wobei die Umsetzung unter Einsatz einer Mischdüse erfolgt;
und wobei die Prozesstemperatur der Dispersion bei der Umsetzung zwischen 26°C und 49°C ist, die oben genannte Aufgabe löst.

*Cyanidfreies Metallsalz*

Zur Herstellung der Doppelmetallcyanid-Verbindungen geeignete cyanidfreie Metallsalze besitzen bevorzugt die allgemeine Formel (I),

$$M(X)_n \qquad (I)$$

wobei

M ausgewählt ist aus den Metallkationen $Zn^{2+}$, $Fe^{2+}$, $Ni^{2+}$, $Mn^{2+}$, $Co^{2+}$, $Sr^+$, $Sn^{2+}$, $Pb^{2+}$ und $Cu^{2+}$, bevorzugt ist M $Zn^{2+}$, $Fe^{2+}$, $Co^{2+}$ oder $Ni^{2+}$,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
n ist 1, wenn X = Sulfat, Carbonat oder Oxalat ist und
n ist 2, wenn X = Halogenid, Hydroxid, Cyanat, Thiocyanat, Isocyanat, Isothiocyanat oder Nitrat ist,
oder geeignete cyanidfreie Metallsalze besitzen die allgemeine Formel (II),

$$M_r(X)_3 \qquad (II)$$

wobei
M ausgewählt ist aus den Metallkationen $Fe^{3+}$, $Al^{3+}$ und $Cr^{3+}$,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
r ist 2, wenn X = Sulfat, Carbonat oder Oxalat ist und
r ist 1, wenn X = Halogenid, Hydroxid, Cyanat, Thiocyanat, Isocyanat, Isothiocyanat, Carboxylat oder Nitrat ist,
oder geeignete cyanidfreie Metallsalze besitzen die allgemeine Formel (III),

$$M(X)_s \qquad (III)$$

wobei
M ausgewählt ist aus den Metallkationen $Mo^{4+}$, $V^{4+}$ und $W^{4+}$
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
s ist 2, wenn X = Sulfat, Carbonat oder Oxalat ist und
s ist 4, wenn X = Halogenid, Hydroxid, Cyanat, Thiocyanat, Isocyanat, Isothiocyanat, Carboxylat oder Nitrat ist,
oder geeignete cyanidfreie Metallsalze besitzen die allgemeine Formel (IV),

$$M(X)_t \qquad (IV)$$

wobei
M ausgewählt ist aus den Metallkationen $Mo^{6+}$ und $W^{6+}$
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
t ist 3, wenn X = Sulfat, Carbonat oder Oxalat ist und
t ist 6, wenn X = Halogenid, Hydroxid, Cyanat, Thiocyanat, Isocyanat, Isothiocyanat, Carboxylat oder Nitrat ist,

In einer bevorzugten Ausführungsform des erfindungsgemäßen Verfahrens ist das cyanidfreie Metallsalz der wässrigen Lösung eines cyanidfreien Metallsalzes eine oder mehrere Verbindung(en) und wird ausgewählt aus der Gruppe bestehend aus Zinkchlorid, Zinkbromid, Zinkjodid, Zinkacetat, Zink¬acetylaceto¬nat, Zinkbenzoat, Zinknitrat, Eisen(II)sulfat, Eisen(II)¬bromid, Eisen¬(II)¬chlorid, Cobalt(II)chlorid, Cobalt(II)thio¬cyanat, Nickel(II)chlorid und Nickel¬(II)nitrat.

*Metallcyanidsalz*

Zur Herstellung der Doppelmetallcyanid-Verbindungen geeignete Metallcyanidsalze besitzen bevorzugt die allgemeine Formel (V)

$$(Y)_a \, M'(CN)_b \, (A)_c \qquad\qquad (V)$$

wobei

M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) undNi(II),
Y ausgewählt ist aus einem oder mehreren Metallkationen der Gruppe bestehend aus Alkalimetall (d.h. Li$^+$, Na$^+$, K$^+$, Rb$^+$, Cs$^+$) und Erdalkalimetall (d.h. Be$^{2+}$, Ca$^{2+}$, Mg$^{2+}$, Sr$^{2+}$, Ba$^{2+}$),
A ausgewählt ist aus einem oder mehreren Anionen der Gruppe bestehend aus Halogeniden (d.h. Fluorid, Chlorid, Bromid, Iodid), Hydroxid, Sulfat, Carbonat, Cyanat, Thiocyanat, Isocyanat, Isothiocyanat, Carboxylat, Oxalat oder Nitrat und
a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

In einer bevorzugten Ausführungsform des erfindungsgemäßen Verfahrens ist das Metallcyanidsalz der wässrigen Lösung eines Metallcyanidsalzes eine oder mehrere Verbindung(en) und wird ausgewählt aus der Gruppe bestehend aus Kaliumhexacyanocobaltat(III), Kaliumhexacyanoferrat(II), Kaliumhexa-cyanoferrat(III), Calciumhexacyanocobaltat(III) und Lithiumhexacyanocobaltat(III).

Bevorzugte Doppelmetallcyanid-Verbindungen, die in den erfindungsgemäßen DMC-Katalysatoren enthalten sind, sind Verbindungen der allgemeinen Formel (VI)

$$M_x[M'_{x'}(CN)_y]_z \qquad\qquad (VI),$$

worin M wie in Formel (I) bis (IV) und
M' wie in Formel (V) definiert ist, und
x, x', y und z sind ganzzahlig und so gewählt, dass die Elektronenneutralität der Doppelmetallcyanidverbindung gegeben ist.

Vorzugsweise ist

x = 3, x' = 1, y = 6 und z = 2,
M = Zn(II), Fe(II), Co(II) oder Ni(II) und
M' = Co(III), Fe(III), Cr(III) oder Ir(III).

In einer bevorzugten Ausführungsform des erfindungsgemäßen Verfahrens ist die Doppelmetallcyanid-Verbindung eine oder mehrere Verbindung(en) und wird ausgewählt aus der Gruppe bestehend aus Zinkhexacyano¬cobaltat(III), Zink¬hexacyanoin¬dat(III), Zinkhexacyanoferrat(III) und Cobalt(II)hexa¬cyanocobaltat(III). Besonders bevorzugt verwendet wird Zinkhexacyanocobaltat(III).

*Organischer Komplexligand*

Die bei der Herstellung der DMC-Katalysatoren zugesetzten organischen Komplexliganden sind beispielsweise in US 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, isoButanol, sek.-Butanol, tert-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-tert.-butylether, Diethylenglykol-mono-tert.-butylether, Tripropylenglykol-mono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, tert-Butanol, 2-Methyl-3-buten-2-ol, 2-Methyl-3-butin-2-ol, Ethylenglykol-mono-tert.-butylether und 3-Methyl-3-oxetan-methanol.

In einer bevorzugten Ausführungsform des erfindungsgemäßen Verfahrens ist der organische Komplexligand eine oder mehrere Verbindung(en) und wird ausgewählt aus der Gruppe bestehend aus Dimethoxyethan, tert-Butanol, 2-Methyl-3-buten-2-ol, 2-Methyl-3-butin-2-ol, Ethylenglykol-mono-tert.-butylether und 3-Methyl-3-oxetan-methanol.

*Komplexbildende Komponente*

Bei dem erfindungsgemäßen Verfahren zur Herstellung der DMC-Katalysatoren werden als komplexbildende Komponente Polyether eingesetzt.

In einer bevorzugten Ausführungsform weist der Polyether ein zahlenmittleres Molekulargewicht von $\geq$ 500 g/mol auf, wobei das zahlenmittlere Molekulargewicht aus der ermittelten OH-Zahl berechnet wird.

Die Bestimmung der OH-Zahlen erfolgt gemäß der Vorschrift der DIN 53240.

Geeignete Polyether beinhalten solche, die mittels Ringöffnungspolymerisation von cyclischen Ethern hergestellt werden, wobei diese cyclischen Ether beispielsweise auch Oxetan-Polymere und auch Tetrahydrofuran-Polymere umfassen. Jegliche Katalyse ist hierfür möglich. Der Polyether weist hierbei geeignete Endgruppe auf, wie beispielsweise Hydroxyl-, Amin, Ester oder Ether-Endgruppen.

In einer besonders bevorzugten Ausführungsform weist der Polyether eine durchschnittliche Hydroxylfunktionalität von 2 bis 8 und ein zahlenmittleres Molekulargewicht im Bereich von 500 g/mol bis 10.000 g/mol, bevorzugt von 700 g/mol bis 5.000 g/mol auf, wobei das zahlenmittlere Molekulargewicht aus der ermittelten OH-Zahl berechnet wird.

In einer besonders bevorzugten Ausführungsform sind die Polyether Polyetherpolyole, wobei die Polyetherpolyole durch Umsetzung von Alkylenoxiden und H-funktionellen Starterverbindungen in Gegenwart von sauren, basischen und/oder metallorganischen Katalysatoren erhalten werden. Diese metallorganischen Katalysatoren sind beispielsweise Doppelmetallcyanid (DMC) - Katalysatoren.

Geeignete Polyetherpolyole sind Poly(oxypropylen)polyole, Poly(oxypropylenoxyethylen)polyole, Polytetramethylenetherglykole sowie Blockcopolymere enthaltend Poly(oxy)ethylen, Poly(oxy)propylen und/oder Poly(oxy)butylen Blöcke wie beispielsweise Poly(oxy)ethylen-Poly(oxy)propylen-Blockcopolymere mit terminalen Poly(oxy)ethylen Blöcken.

In einer bevorzugten Ausführungsform ist das Polyetherpolyol ein Poly(oxypropylen)polyol mit einem zahlenmittleren Molekulargewicht von $\geq$ 500 g/mol, wobei das zahlenmittlere Molekulargewicht aus der ermittelten OH-Zahl berechnet wird.

In einer besonders bevorzugten Ausführungsform ist das Polyetherpolyol ein Poly(oxypropylen)polyol, bevorzugt ein Poly(oxypropylen)diol und/oder ein Poly(oxypropylen)triol mit einem zahlenmittleren Molekulargewicht von 700 g/mol bis 4000 g/mol, wobei das zahlenmittlere Molekulargewicht aus der ermittelten OH-Zahl berechnet wird.

In einer alternativen Ausführungsform haben die Polyether eine durchschnittliche Hydroxylfunktionalität von 2 bis 8 und ein zahlenmittleres Molekulargewicht im Bereich von 150 g/mol bis kleiner 500 g/mol, bevorzugt von 200 g/mol bis 400 g/mol, wobei das zahlenmittlere Molekulargewicht aus der ermittelten OH-Zahl berechnet wird.

In einer bevorzugten alternativen Ausführungsform sind die alternativen Polyether Polyetherpolyole, wobei diese alternativen Polyetherpolyole eine durchschnittliche Hydroxylfunktionalität von 2 bis 8 und ein zahlenmittleres Molekulargewicht im Bereich von 150 g/mol bis kleiner 500 g/mol, bevorzugt eine durchschnittliche Hydroxylfunktionalität von 2 bis 8 und ein zahlenmittleres Molekulargewicht im Bereich von 200 g/mol bis 400 g/mol aufweisen wobei das zahlenmittlere Molekulargewicht aus der ermittelten OH-Zahl berechnet wird. Diese alternativen Polyetherpolyole werden ebenfalls durch Umsetzung von Alkylenoxiden und H-funktionellen Starterverbindungen in Gegenwart von sauren, basischen und/oder metallorganischen Katalysatoren erhalten. Diese metallorganischen Katalysatoren sind beispielsweise Doppelmetallcyanid (DMC) - Katalysatoren.

Geeignete alternative Polyetherpolyole sind Poly(oxypropylen)polyole, Poly(oxypropylenoxyethylen)polyole, Polytetramethylenetherglykole sowie Blockcopolymere enthaltend Poly(oxy)ethylen, Poly(oxy)propylen und/oder Poly(oxy)butylen Blöcke wie beispielsweise Poly(oxy)ethylen-Poly(oxy)propylen-Blockcopolymere mit terminalen Poly(oxy)ethylen Blöcken. Weiterhin sind auch Tripropylenglykol, Triethylenglykol, Tetrapropylenglykol, Tetraethylenglykol, Dipropylenglykolmonomethylether, Tripropylenglykolmonomethylether, sowie Monoalkyl- und Dialkylether von Glykolen und Poly(alkylenglykol)en geeignet.

In einer besonders bevorzugten alternativen Ausführungsform ist das alternative Polyetherpolyol ein Polypropylenglykol und/oder ein Polyethylenglykol mit einem zahlenmittleren Molekulargewicht im Bereich von 150 g/mol bis kleiner 500 g/mol, wobei das zahlenmittlere Molekulargewicht aus der ermittelten OH-Zahl berechnet wird.

*Mischdüse*

Die Herstellung der DMC-Katalysatordispersion erfolgt unter Einsatz einer Mischdüse (z.B. einer Glattstrahldüse, Levosdüse, Boschdüse und ähnlichem), bevorzugt eines Strahldispergators, wie dies in der Deutschen Patentanmel¬dung WO 01/39883 A1 beschrieben ist.

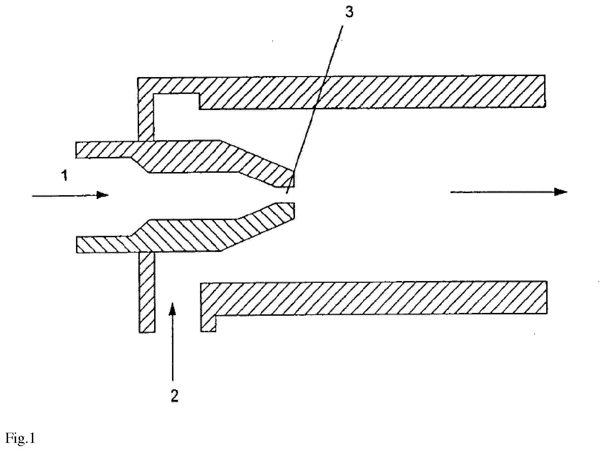

Der prinzipielle Aufbau und die Wirkungsweise geeigneter Mischdüsen soll im folgenden beschrieben werden. Fig. 1 zeigt den schematischen Aufbau einer einfachen Glattstrahldüse. Der Eduktstrom 1 wird zunächst in der Düse 3 beschleunigt und mit hoher Strömungsgeschwindigkeit in den langsam fließenden Eduktstrom 2 verdüst. Dabei wird Eduktstrom 2 beschleunigt und Eduktstrom 1 abgebremst. Ein Teil der kinetischen Energie von Eduktstrahl 1 wird bei diesem Vorgang in Wärme umgewandelt und steht somit für den Vermischungsvorgang nicht mehr zur Verfügung. Die Vermischung der beiden Eduktströme erfolgt anschließend über den turbulenten Zerfall des resultierenden Strahls in Wirbel unterschiedlicher Größe (Wirbelkaskade). Im Vergleich zum Rührkessel können auf diese Weise Konzentrationsunterschiede deutlich schneller abgebaut werden, da deutlich größere und homogenere Leistungsdichten erzielt werden können. Die mittlere Leistungsdichte P berechnet sich dabei nach der folgenden Formel:

$$ P = \frac{\Delta p \cdot \dot{V}}{V} $$

mit:

$\Delta p$: Druckverlust in der Düse
$\dot{V}$: Volumenstrom
$V$: Volumen der Düsenbohrung

Der Einsatz solcher Düsen soll im folgenden als Methode 1 bezeichnet werden.

In einer Glattstrahldüse wird ein erster Eduktstrom zunächst in einer Düse beschleu-nigt und mit hoher Strömungsgeschwindigkeit in einen langsam fließenden zweiten Eduktstrom verdüst. Die Vermischung der beiden Eduktströme erfolgt anschließend über den turbulenten Zerfall des resultierenden Strahls in Wirbel unterschiedlicher Größe (Wirbelkaskade). Im Vergleich zum Rührkessel können auf diese Weise Konzentrationsunterschiede deutlich schneller abgebaut werden, da deutlich größere und homogenere Leistungsdichten erzielt werden können.

*Strahldispergator*

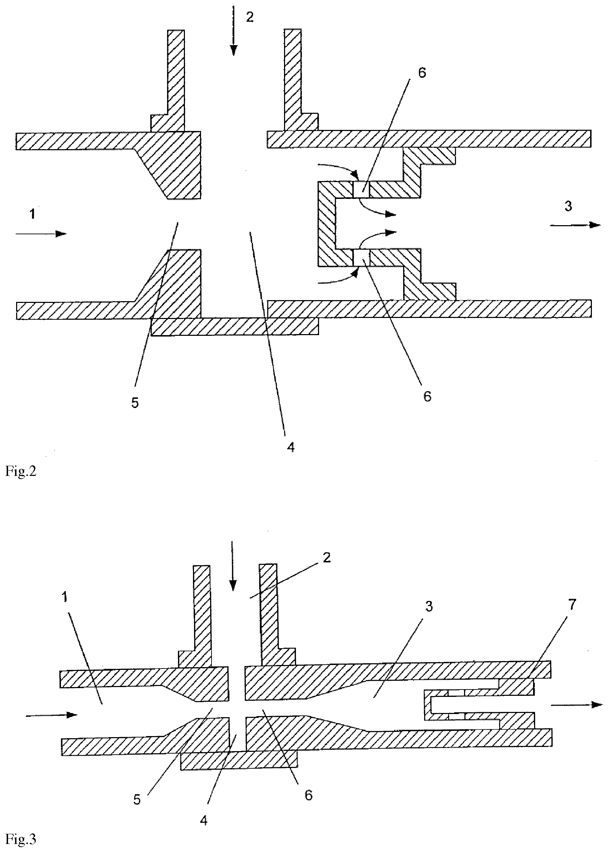

Bevorzugt wird für das erfindungsgemäße Verfahren ein Strahldispergator wie er in Fig. 2 oder Fig. 3 dargestellt ist, eingesetzt. Der Strahldispergator kann so aufgebaut sein (Fig. 2), dass zwei Düsen 5 und 6 hintereinander angeordnet sind. Der Eduktstrom 1 wird in der Düse 5 durch die Querschnittsverengung zunächst stark beschleunigt. Der beschleunigte Strahl saugt dabei aufgrund der hohen Strö¬mungsgeschwindigkeit die zweite Komponente an. Der Abstand der Düsen wird be¬vorzugt so gewählt werden, dass in der Mischkammer 4 aufgrund der kurzen Ver-weilzeit nur Keimbildung jedoch kein Kristallwachstum erfolgt. Maßgeblich für die optimale Auslegung des Strahldispergators ist somit die Keimbildungs¬geschwindig-keit des Feststoffs. Günstigerweise wird eine Verweilzeit von 0,0001 s bis 0,15 s, vorzugsweise 0,001 s bis 0,1 s eingestellt. Das Kristallwachstum erfolgt erst im Ab-lauf 3. Der Durchmesser der Düsen 6 sollte bevorzugt so gewählt werden, dass dort eine weitere Beschleunigung der teilweise gemischten Edukteströme erfolgt. Auf-grund der dadurch in den Düsen 6 zusätzlich auftretenden Scherkräfte wird im Ver-gleich zur Methode 1 der Zustand der homogenen Vermischung durch einen schnel-leren Wirbelzerfall in kürzerer Zeit erreicht. Dadurch ist es im Gegensatz zu Methode 1 selbst bei Fällungsreaktionen mit sehr hoher Keimbildungs¬geschwindigkeit mög-lich, den Zustand einer idealen Vermischung der Edukte zu erreichen, so dass die Ein¬stellung von definierten stöchiometrischen Zusammen¬setzungen während der Fällungsreaktion möglich ist. Als günstig haben sich Düsendurchmesser von 5000 $\mu$m bis 50 $\mu$m, vorzugsweise 2000 $\mu$m bis 200 $\mu$m erwiesen bei Druckverlusten in der Düse von 0,1 bar bis 1000 bar oder Leistungsdichten im Bereich von $1*10^7$ W/m$^3$ bis $1*10^{13}$ W/m$^3$. Dieser Vermischungs¬¬vorgang soll im folgenden mit Methode 2 bezeichnet werden.

Je nach gewünschter Partikelgröße können noch n Düsen (mit n = 1 - 5) nach¬ge-schaltet werden, so dass man einen mehrstufigen Strahldispergator erhält. In Fig. 3 ist ein solcher mehrstufiger Strahldispergator gezeigt. Im Anschluss an die Düse 6 wird die Dispersion noch einmal durch die Düse 7 geführt. Für die Auslegung der Düsendurchmesser gilt das gleiche wie für Düse 6.

Der zusätzliche Vorteil weiterer Dispergatoren gegenüber der Methode 2 besteht darin, dass durch die großen Scherkräfte in den Düsen bereits gebildete Partikel mechanisch zerkleinert werden können. Auf diese Weise ist es möglich, Partikel mit Durchmessern von 10 $\mu$m bis 0,1 $\mu$m herzustellen. Anstelle mehrerer hintereinander geschalteter Düsen kann die Zerkleinerung aber auch durch Kreislaufführung der Dispersion erreicht werden. Der Einsatz solcher Düsen wird im folgenden mit Methode 3 gekennzeichnet.

Durch die Energiedissipation in den Düsen und durch die Kristallisationsenthalpie kann es zu einer Erwärmung der Dispersion kommen. Da die Temperatur einen wesent¬lichen Einfluss auf den Kristallbildungsprozess haben kann, kann für die isotherme Prozessführung hinter dem Mischorgan ein Wärmeübertrager eingebaut werden.

Ein problemloses Scale-up ist beispielsweise möglich durch den Einsatz einer größeren Zahl von Bohrungen, die Parallelschaltung mehrerer Mischorgane oder die Ver¬größerung der freien Düsenfläche. Letzteres wird jedoch nicht durch eine Er-höhung des Düsendurchmessers erreicht, da auf diese Weise die Möglichkeit des Auftretens eines Kernstroms besteht, wodurch eine Verschlechterung des Misch-ergebnisses resultiert. Bei Düsen mit großen freien Düsenflächen sind deswegen bevorzugt Schlitze mit entsprechender Fläche einzusetzen.

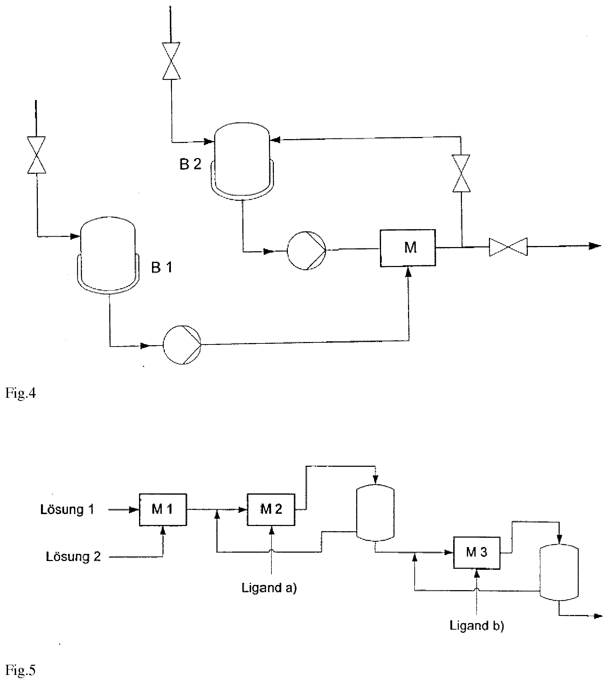

Die Herstellung der DMC-Katalysatordispersion erfolgt erfindungsgemäß unter Ein-satz einer Mischdüse, bevorzugt eines Strahldispergators. Beispiele geeigneter Appa-raturen sind in Fig. 4 und 5 gezeigt. Fig. 4 zeigt ein semi-batch-Verfahren unter Ein-satz eines Schlaufenreaktors, Fig.5 ein kontinuierliches Verfahren zur Herstellung der DMC-Katalysatordispersion.

In einer Ausführungsform des erfindungsgemäßen Verfahrens umfasst die Herstellung des Doppelmetallcyanid-Katalysators (DMC)

i) in einem ersten Schritt eine Umsetzung einer wässrigen Lösung eines cyanidfreien Metallsalzes, einer wässrigen Lösung eines Metallcyanidsalzes, eines organischen Komplexliganden sowie einer komplexbildenden Komponente unter Bildung einer Dispersion; wobei die Umsetzung unter Einsatz einer Mischdüse erfolgt; und wobei die Temperatur der Dispersion bei der Umsetzung zwischen 26°C und 49°C ist;

(ii) optional in einem zweiten Schritt die Abtrennung des Feststoffs aus der aus (i) erhaltenen Dispersion;

(iii) optional in einem dritten Schritt die Waschung des isolierten Feststoff mit einer wässrigen Lösung eines organischen Komplexliganden mittels einer Filterkuchenwäsche;

(iv) und optional in einem vierten Schritt die Trocknung des erhaltenen Feststoffs.

*Schritt i)*

Bevorzugt werden dabei zunächst die wässrigen Lösungen des cyanidfreien Metallsalzes, z.B. Zinkchlorid, eingesetzt im stöchiometrischen Überschuss (mindestens 50 Mol-% bezo¬gen auf das Metallcya,nidsalz), und des Metallcyanidsalzes, z.B. Kaliumhexa-cyano¬cobaltat , in Gegenwart des organi¬schen Komplexliganden, der z.B. tert.-Buta¬nol sein kann, umge¬setzt, wobei sich eine Dispersion bildet. Erfindungsgemäß erfolgt die Herstellung dieser DMC-Katalysatordispersion unter Einsatz einer Misch-düse, bevorzugt eines Strahldispergators.

Die Herstellung der DMC-Katalysatordispersion im Semi-batch Verfahren unter Verwendung eines Strahl¬dispergators in Kombination mit einem Schlaufenreaktor (gemäß Fig. 4) wird im Folgenden erläutert. Hierbei kann entweder die wässrige Lösung eines cyanidfreien Metallsalzes aus dem Behälter B2 im Kreis geführt und die wässrige Metallcyanidlösung aus Behälter B1 zudosiert werden, oder umgekehrt. Bei der Vereinigung beider Ströme im Mischorgan M kommt es zur Bildung einer Dispersion der DMC-Verbindung. Die Herstellung der Dispersion der DMC-Verbindung kann nach Methode 1, 2 oder 3 erfolgen, bevorzugt nach Methode 2 oder 3. Der Vorteil dieser Methoden besteht in der Möglichkeit, während des gesamten Fällungsvorgangs ein konstantes Eduktverhältnis zu realisieren.

Bevorzugt wird die gebildete Dispersion nach der Fällung noch einige Minuten bis mehrere Stunden im Kreislauf durch den Strahldispergator geführt.

Die Düsendurchmesser liegen dabei bevorzugt zwischen 2000 $\mu$m bis 200 $\mu$m bei Druckverlusten in der Düse zwischen 0,1 bar bis 1000 bar.

Der organische Komplexligand kann dabei in der wässrigen Lösung des cyanidfreien Metallsalzes und/ oder des Metallcyanidsalzes vorhanden sein, oder er wird der nach Ausfällung der Doppelmetallcyanid-Verbindung erhaltenen Dispersion unmittelbar zudosiert (über Behälter B 1 oder B2).

Bevorzugt wird der im Kreislauf durch den Strahldispergator zirkulierenden Dispersion anschließend noch eine komplexbildende Komponente über Behälter B 1 oder B2 zudosiert. Die komplexbildende Kom-ponente wird dabei bevorzugt in einer Mischung aus Wasser und organischem Komplexliganden eingesetzt.

Die Dosierung der komplexbildenden Komponente in den Kreislauf und ein anschließendes Rezirkulieren findet bevorzugt unter Druck¬verlus-ten in der Düse zwischen 0,001 bar und 10 bar statt.

Erfindungsgemäß kann die DMC-Katalysatordispersion auch in einem konti¬nuier-lichen Verfahren, wie es beispielhaft in Fig. 5 gezeigt ist, hergestellt werden. Die wässrigen Lösungen des cyanidfreien Metallsalzes und des Metallcyanidsalzes werden nach Methode 1, 2 oder 3 im Mischorgan M1 umge¬setzt, wobei sich eine Dispersion bil¬det. Der organische Komplexligand kann dabei in der wäßrigen Lösun¬g des cyanidfreien Metall-salzes und/ oder des Metallcyanidsalzes vorhanden sein. In diesem Fall entfällt in Fig. 5 die Mischstufe M2. Möglich ist auch die Zugabe des organischen Komplexliganden nach der Aus¬fällung der Doppelme¬tallcyanid-Verbindung über das Mischorgan M2. Zur Erhöhung der Verweilzeit der Dispersion kann diese über das Mischorgan M2 im Kreislauf gefahren werden. Im Anschluss kann im Mischorgan M3 die komplexbildende Komponente - bevorzugt in einer Mischung aus Wasser und organischem Komplexliganden - zugegeben und zur Er-höhung der Verweilzeit rezirkuliert werden.

*Prozesstemperatur*

In einer bevorzugten Ausführungsform des erfindungsgemäßen Verfahrens ist die Temperatur in Schritt i) 28 °C bis 47 °C, bevorzugt 29 °C bis 42 °C und besonders bevorzugt 30 °C bis 40 °C. Hierbei entspricht die Prozesstemperatur der Prozesstemperatur im Behälter B2 in Fig. 4. Eine Prozesstemperatur von 29 °C bis 42 °C und von 30 °C bis 40 °C führt zu einer weiteren Verbesserung der Aktivität des DMC-Katalysators.

*Schritt (ii)*

In einer bevorzugten Ausführungsform des erfindungsgemäßen Verfahrens wird in einem zweiten Schritt (ii) der Feststoffs aus der aus (i) erhaltenen Dispersion abgetrennt.

Hierbei erfolgt die Isolierung des Feststoffs (d.h. die Vorstufe des erfindungsgemäßen Katalysators) aus der Dispersion durch bekannte Techniken, wie Zentrifugation oder Filtration.

Geeignete Filter¬vorrich¬tungen sind beispielsweise beschrieben in "Ullmann's Encyclopedia of Industrial Chemistry", Vol. B 2, Kapitel 9. und 10., VCH, Weinheim, 1988 und H. Gasper, D. Oechsle, E. Pongratz (Hrsg.): "Handbuch der industriellen Fest/Flüssig-Filtration", Wiley-VCH Verlag GmbH, Weinheim, 2000.

Das zur Filtration notwendige Druckgefälle kann dabei durch Schwerkraft, durch Zentrifugalkraft (z.B. Filterzentrifugen), bevorzugt durch Gasdifferenzdruck (z.B. Vakuumfilter oder Druckfilter) oder durch Flüssigkeitsdruck (z.B. Filterpressen, Trommel- oder Scheibenfilter sowie eventuell Querstromfiltrationsmodule) aufge-bracht werden.

Für die Abtrennung der Katalysatoren können sowohl diskontinuierlich als auch kontinuierlich betriebene Filtervorrichtungen eingesetzt werden. Beispiele für diskontinuierlich arbeitende Filtervorrichtungen sind Schäl- und Stülpfilterzentrifugen, Membran-, Kammer-, Rahmen- oder Röhrenfilterpressen, Pressfilterautomaten, Auto¬-press-Vorrichtungen, Tellerdruck-, Kerzen- und Plattenfilter sowie Vakuum- und Drucknutschen. Beispiele für kontinuierlich arbeitende Filtervorrichtungen sind Sieb-bandpressen, Druck- und Vakuumtrommelfilter, Druck- und Vakuumscheiben,filter, Bandfilter und Querstromfilter.

Besonders geeignet zur Filtration der DMC-Katalysatordispersion im Labormaßstab sind Vakuum- oder Druckfilter oder -nutschen, im Technikums- und Betriebsmaß¬stab Drucknutschen, Filterpressen und Pressfilterautomaten.

Als besonders geeignet haben sich im Pilot- und Technikumsmaßstab Membran¬filter-pressen erwiesen. Diese ermöglichen unter Zuhilfenahme eines geeigneten Filter-tuches, bevorzugt eines Membrantuches, die Filtration der DMC-Katalysator-dispersion aufgrund eines aufgebrachten Flüssigkeitsdruckgefälles.

Die Filtration wird i.a. bei Temperaturen von 10 bis 80°C durchgeführt. Die angelegten Druckdifferenzen können 0,001 bar bis 200 bar, bevorzugt 0,1 bar bis 100 bar, besonders bevorzugt 0,1 bar bis 25 bar betragen, wobei die angelegte Druckdifferenz von der eingesetzten Vorrichtung abhängig ist.

*Schritt (iii)*

Der in Schritt (ii) erhaltene isolierte Feststoff kann mittels Redispergieren oder Filterkuchenwäsche gewaschen werden.

In einer bevorzugten Ausführungsform des erfindungsgemäßen Verfahrens wird in einem dritten Schritt (iii) der isolierte Feststoff mit einer wässrigen Lösung eines organischen Komplexliganden mittels einer Filterkuchenwäsche gewaschen.

Hierbei erfolgt die Filterkuchenwäsche bevorzugt durch Anmaischen oder bevorzugt durch eine Durchströmungswäsche. Dabei wird der Kuchen mit der Waschflüssigkeit durchströmt, und die vorher im Kuchen enthaltene Flüssigkeit wird verdrängt, wobei auch Diffusionseffekte wirksam werden. Die Entfeuchtung des gewaschenen Kuchens kann durch Gasdifferenzdruck, Fliehkraft oder mechanisches Pressen erfolgen oder bevorzugt kombiniert durch eine Gasdifferenz-druck¬ent¬feuchtung mit nachfolgendem mechanischen Auspressen. Der Druck zum mecha¬nischen Auspresssen kann dabei sowohl mechanisch als auch durch Membranen aufgebracht werden.

Mit Hilfe der Filterkuchenwäsche wird der Herstellungsprozess vereinfacht und damit auch beschleunigt. Das bevorzugte Verhältnis von Waschflüssigkeit zu Filterkuchen-volumen liegt bei den Mengen, die einen vollständigen Austausch der im ursprünglichen Filterkuchen vorhandenen Flüssigkeitsmenge bewirken.

In einer alternativ bevorzugten Ausführungsvariante des erfindungsgemäßen Verfahrens wird der isolierte Feststoff anschließend in einem dritten Verfahrensschritt mit einer wässrigen Lösung des organischen Komplexliganden gewaschen (z.B. durch Redispergieren und anschließende erneute Isolierung durch Filtration oder Zentrifugation). Auf diese Weise können zum Beispiel wasserlösliche Nebenprodukte, wie Kaliumchlorid, aus dem erfindungsgemäßen Katalysator entfernt werden. Bevorzugt liegt die Menge des organischen Komplexliganden in der wässrigen Waschlösung zwischen 40 und 80 Gew.-%, bezogen auf die Gesamtlösung.

Optional wird im dritten Schritt der wässrigen Waschlösung komplexbildende Komponente, bevorzugt im Bereich zwischen 0,5 und 5 Gew.-%, bezogen auf die Gesamtlösung, zugefügt.

Außerdem ist es vorteilhaft, den isolierten Feststoff mehr als einmal zu waschen. Vorzugsweise wird in einem ersten Waschschritt (iii-1) mit einer wässrigen Lösung des organischen Komplexliganden (z.B. durch Redispergieren und anschließende erneute Isolierung durch Filtration oder Zentrifugation), um auf diese Weise zum Beispiel wasserlösliche Nebenprodukte, wie Kaliumchlorid, aus dem erfindungsgemäßen Katalysator zu entfernen. Besonders bevorzugt liegt die Menge des organischen Komplexliganden in der wässrigen Waschlösung zwischen 40 und 80 Gew.-%, bezogen auf die Gesamtlösung des ersten Waschschritts. In den weiteren Waschschritten (iii-2) wird entweder der erste Waschschritt einmal oder mehrmals, vorzugsweise einmal bis dreimal wiederholt, oder vorzugsweise wird eine nicht wässrige Lösungen, wie z.B. eine Mischung oder Lösung aus organischem Komplexliganden und komplexbildender Komponente (bevorzugt im Bereich zwischen 0,5 und 5 Gew.-%, bezogen auf die Gesamtmenge der Waschlösung des Schrittes (iii-2)), als Waschlösung eingesetzt und der Feststoff damit einmal oder mehrmals, vorzugsweise einmal bis dreimal gewaschen.

*Schritt (iv)*

In einer bevorzugten Ausführungsform des erfindungsgemäßen Verfahrens wird in einem vierten Schritt (iv) der erhaltene Feststoff anschließend getrocknet.

Hierbei wird der isolierte und gegebenenfalls gewaschene Feststoff anschließend, gegebenenfalls nach Pulverisierung, bei Temperaturen von im allgemeinen 20 - 100°C und bei Drücken von im allgemeinen 0,1 mbar bis *Normaldruck* (1013 mbar) getrocknet.

*Schritte (ii) und (iii)*

In einer bevorzugten Ausführungsform des erfindungsgemäßen Verfahrens erfolgen die Schritte (ii) und (iii) in einer Filterpresse.

Es hat sich als vorteilhaft erwiesen, den gewaschenen Filterkuchen nach der Filter-kuchen¬wäsche bei Drücken von 0,5 bis 200 bar, bevorzugt bei möglichst hohen Drücken, auszupressen. Dies kann z.B. direkt im Anschluss an die Filter¬kuchen-wäsche in einer Filterpresse erfolgen oder mittels anderer geeigneter Press¬vor-richtungen, die ein Aufbringen eines mecha¬ni¬schen Druckes ermöglichen, so dass die im Filterkuchen vorhan¬dene Flüssigkeit durch eine Membran oder ein geeignetes Filtertuch entweichen kann. Das sich an das Waschen des Filterkuchens anschließende bevorzugt vor dem Trocknen durchzuführende mechanische Entfeuchten des Filterkuchens kann bevorzugt in der Filterpresse geschehen, bevorzugt durch mechanisches Auspressen durch einen auf die Membranen aufgegebenen Druck. Das mechanische Entfeuchten führt bevorzugt zu einer möglichst weitgehenden Entfernung der Waschflüssigkeit aus dem Filter-kuchen.

*Schritte (ii), (iii) und (iv)*

Der DMC-Katalysator wird anschließend bei Temperaturen von etwa 20 bis 100°C und bei Drücken von etwa 0,1 mbar bis Normaldruck (1013 mbar) getrocknet. Hierzu sind Kontakttrockner und Konvektionstrockner wie auch Sprühtrockner geeignet. Die Trocknung wird bevorzugt auch direkt in den Vorrichtungen zur mechanischen Flüssigkeitsabtrennung durchgeführt, wenn diese dafür geeignet sind (z.B. Nutschtrockner, Zentrifugentrockner, "heiße Filterpresse").

In einer besonders bevorzugten Ausführungsform des erfindungsgemäßen Verfahrens erfolgen die Schritte (ii), (iii) und (iv) in einer beheizbaren Filterpresse.

Im Verfahren bevorzugt eingesetzt wird die beheizbare Filterpresse. Diese ist aufgebaut wie eine übliche Filterpresse mit Membranpaket. Konstruktiv unterscheiden sich die zu verwendenden Membranplatten von üblichen Membranplatten dadurch, dass ein Heizmedium den Raum hinter der Membran durchströmen kann. Bevorzugt werden flüssigkeitsdichte (sogenannte "tropf-" oder "gasdichte") Membranfilterplatten eingesetzt.

Das aufgeheizte Heizmedium strömt auf der Rückseite der Pressmembranen, vom Filterkuchen durch die Pressmembran und das Filtermedium vollständig getrennt, an den Filterkuchen vorbei und erwärmt diese dabei. Das Pressmedium steht dabei unter einem ausreichend hohen Druck, um den Kontakt der Membranen mit den Filterkuchen zu gewährleisten. Die Filterkuchen können ein- oder beidseitig beheizt werden. Günstig hinsichtlich der Trocknungsdauer ist die beidseitige Beheizung.

Zur Unterstützung des Trocknungsvorgangs liegt filtratseitig Vakuum an. Dieses Vakuum kann beispielsweise durch eine Flüssigkeitsringpumpe erzeugt werden. Der abgesaugte Brüdenstrom wird vor der Vakuumpumpe gekühlt, um die flüchtigen Bestandteile (z.B. tert.-Butanol und Wasser) auszukondensieren. Mess- und Regelgrößen sind die auskondensierte Menge, der Druck im Filtratsystem der Presse und die Filterkuchentemperatur.

Im beschriebenen Verfahren betragen die Membranpressdrücke bevorzugt 0,1 bar bis 10 bar. Temperaturen des Press- und Heizmediums betragen 30°C bis 80°C bevorzugt 40°C bis 60°C. Der filtratseitige Druck ist bevorzugt kleiner als 100 mbar Die Durchflussrate des Heizmediums ist dabei so hoch zu wählen, dass ein guter Wärmeübergang zwischen Heizmedium und Produkt erfolgt. Trocknungszeiten betragen i.A. einige Minuten bis mehrere Stunden, üblicherweise eine bis zehn Stunden. Restfeuchten unterhalb des Zielwertes von ca. 5% werden mit dieser Art der Trocknung sicher erreicht.

In weiteren Verfahrensschritten kann das so isolierte und von Nebenkomponenten befreite Produkt gemahlen und verpackt werden.

*Product-by-process Anspruch*

Ein weiterer Gegenstand der vorliegenden Erfindung ist der nach dem erfindungsgemäßen Verfahren hergestellte DMC-Katalysator.

Ein weiterer Gegenstand der vorliegenden Erfindung ist die Verwendung der nach dem erfindungsgemäßen Verfahren hergestellten DMC-Katalysatoren in einem Verfahren zur Herstellung von Polyoxyalkylenpolyolen, bevorzugt Polyetherpolyolen durch Polyaddition von Alkylenoxiden an aktive Wasserstoffatome aufweisende Starterverbindungen und/oder Polyethercarbonatpolyolen durch Polyaddition von Alkylenoxiden an aktive Wasserstoffatome aufweisende Starterverbindungen in Gegenwart von Kohlendioxid.

Die nach dem erfindungsgemäßen Verfahren hergestellten DMC-Katalysatoren können wegen ihrer außerordentlich hohen Akti¬vität häufig in sehr niedrigen Kon-zen¬trationen eingesetzt werden (25 ppm und weniger, bezogen auf die Menge des her¬zustellenden Polyoxyalkylenpolyols, bevorzugt des Polyetherpo¬lyols. Werden die in Gegenwart der nach dem erfin-dungs¬gemäßen Verfahren hergestellten DMC-Katalysatoren hergestellten Polyoxyalkylenpolyole, bevorzugt Poly¬ether¬-polyole, zur Herstellung von Polyurethanen verwendet, kann auf eine Ent¬fernung des Kata¬lysators aus dem Polyoxyalkylenpolyol, bevorzugt Polyetherpolyol, verzichtet werden, ohne dass die Pro¬dukt¬quali-täten des er¬halte¬nen Polyurethans nachteilig beeinflusst werden.

**Beispiele**

Die Bestimmung der OH-Zahlen erfolgte gemäß der Vorschrift der DIN 53240. Die Viskositäten wurden mittels Rotationsviskosimeter (Physica MCR 51, Hersteller: Anton Paar) nach der Vorschrift der DIN 53018 ermittelt.

**Herstellung der DMC-Katalysatoren:**

Beispiel 1 (Vergleich):

Der Katalysator wurde mit einer Apparatur gemäß Fig. 4 aus WO 01/39883 A1 hergestellt.

In einem Schlaufenreaktor, der einen Strahldispergator gemäß Fig. 2 aus WO 01/39883 A1 mit einer Bohrung (Durchmesser 0,7 mm) enthält, wurde eine Lösung aus 258 g Zinkchlorid in 937 g destilliertem Wasser und 135 g tert.-Butanol bei 25°C zirkuliert (bestimmt im Behälter D2 in Fig. 4 WO 01/39883 A1). Hierzu wurde eine Lösung aus 26 g Kaliumhexa¬cyano¬cobaltat in 332 g destilliertem Wasser zudosiert. Der Druckverlust im Strahldispergator betrug dabei 2,9 bar. Anschließend wurde die gebildete Dispersion 60 min bei 25°C und einem Druckverlust im Strahldispergator von 2,9 bar zirkuliert. Danach wurde eine Mischung aus 5,7 g tert.-Butanol, 159 g destilliertem Wasser und 27,6 g Polypropylenglykol 1000 (PPG-1000) zudosiert und die Dispersion dann 80 min bei 25°C und einem Druckverlust im Strahldispergator von 2,9 bar zirkuliert.

230 g der erhaltenen Dispersion wurden in einer Drucknutsche mit 20 cm$^3$ Filterfläche filtriert und anschließend mit einer Mischung aus 82 g tert.-Butanol, 42,3 g destilliertem Wasser und 1,7 g Polypropylenglykol 1000 gewaschen. Der gewaschene Filterkuchen wurde mechanisch zwischen 2 Streifen Filterpapier abgepresst und abschließend für 2 h bei 60°C im Hochvakuum bei ca. 0,05 bar (absolut) getrocknet.

Beispiel 2:

Beispiel 2 wurde analog zu Beispiel 1 (Vergleich) durchgeführt, mit dem Unterschied, dass die Herstellung der DMC-Dispersion bei 30°C anstelle von 25°C erfolgte.

Beispiel 3:

Beispiel 3 wurde analog zu Beispiel 1 (Vergleich) durchgeführt, mit dem Unterschied, dass die Herstellung der DMC-Dispersion bei 35°C anstelle von 25°C erfolgte.

Beispiel 4:

Beispiel 4 wurde analog zu Beispiel 1 (Vergleich) durchgeführt, mit dem Unterschied, dass die Herstellung der DMC-Dispersion bei 40°C anstelle von 25°C erfolgte.

Beispiel 5 (Vergleich):

Beispiel 5 (Vergleich) wurde analog zu Beispiel 1 (Vergleich) durchgeführt, mit dem Unterschied, dass die Herstellung der DMC-Dispersion bei 50°C anstelle von 25°C erfolgte.

Beispiel 6 (Vergleich):

Beispiel 6 (Vergleich) wurde analog zu Beispiel 1 (Vergleich) durchgeführt, mit dem Unterschied, dass die Herstellung der DMC-Dispersion bei 70°C anstelle von 25°C erfolgte.

Beispiel 7 (Vergleich):

Der Katalysator wurde mit einer Apparatur gemäß Fig. 4 aus WO 01/39883 A1 hergestellt.

In einem Schlaufenreaktor, der einen Strahldispergator gemäß Fig. 2 aus WO 01/39883 A1 mit einer Bohrung (Durchmesser 0,7 mm) enthält, wurde eine Lösung aus 258 g Zinkchlorid in 937 g destilliertem Wasser und 135 g tert.-Butanol bei 25°C zirkuliert. Hierzu wurde eine Lösung aus 26 g Kaliumhexa¬cyano¬cobaltat in 332 g destilliertem Wasser zudosiert. Der Druckverlust im Strahldispergator betrug dabei 5,0 bar. Anschließend wurde die gebildete Dispersion 60 min bei 25°C und einem Druckverlust im Strahldispergator von 5,0 bar zirkuliert. Danach wurde eine Mischung aus 5,7 g tert.-Butanol, 159 g destilliertem Wasser und 27,6 g Polypropylenglykol 1000 zudosiert und die Dispersion dann 80 min bei 25°C und einem Druckverlust im Strahldispergator von 5,0 bar zirkuliert. 230 g der erhaltenen Dispersion wurden in einer Drucknutsche mit 20 cm$^3$ Filterfläche filtriert und anschließend mit einer Mischung aus 82 g tert.-Butanol, 42,3 g destilliertem Wasser und 1,7 g Polypropylenglykol 1000 gewaschen. Der gewaschene Filterkuchen wurde mechanisch zwischen 2 Streifen Filterpapier abgepresst und abschließend für 2 h bei 60°C im Hochvakuum bei ca. 0,05 bar (absolut) getrocknet.

Beispiel 8:

Beispiel 8 wurde analog zu Beispiel 7 (Vergleich) durchgeführt, mit dem Unterschied, dass die Herstellung der DMC-Dispersion bei 30°C anstelle von 25°C erfolgte.

Beispiel 9:

Beispiel 9 wurde analog zu Beispiel 7 (Vergleich) durchgeführt, mit dem Unterschied, dass die Herstellung der DMC-Dispersion bei 35°C anstelle von 25°C erfolgte.

Beispiel 10:

Beispiel 10 wurde analog zu Beispiel 7 (Vergleich) durchgeführt, mit dem Unterschied, dass die Herstellung der DMC-Dispersion bei 40°C anstelle von 25°C erfolgte.

Beispiel 11 (Vergleich):

Beispiel 11 (Vergleich) wurde analog zu Beispiel 7 (Vergleich) durchgeführt, mit dem Unterschied, dass die Herstellung der DMC-Dispersion bei 50°C anstelle von 25°C erfolgte.

Beispiel 12 (Vergleich):

Beispiel 12 (Vergleich) wurde analog zu Beispiel 7 (Vergleich) durchgeführt, mit dem Unterschied, dass die Herstellung der DMC-Dispersion bei 70°C anstelle von 25°C erfolgte.

Beispiel 13 (Vergleich):

Beispiel 13 (Vergleich) wurde analog zu Beispiel 3 durchgeführt, mit dem Unterschied, dass bei der Herstellung des DMC-Katalysators die komplexbildende Komponente Polypropylenglykol 1000 durch Cholsäure-Natriumsalz ersetzt wurde.

**Katalysator-Testung ("8K Diol Stressed Test"):**

Die Testung der DMC-Katalysatoren erfolgte im sogenannten "8K Diol Stressed Test". Hierbei wurde ausgehend von einem bifunktionellen Polypropylenglykol-Starter mit OH-Zahl = 147 mg KOH/g ("Arcol Polyol 725" der Firma Covestro) bei kurzer Propylenoxid-Dosierzeit (30 Minuten) ein Polypropylenglykol mit berechneter OH-Zahl = 14 mg KOH/g, d.h. Molekulargewicht = 8.000 g/mol ("8K Diol") hergestellt. Das entscheidende Beurteilungskriterium für die Katalysatorqualität/-aktivität in diesem Test ist die Viskosität des erhaltenen Polyols, wobei ein DMC-Katalysator erhöhter Qualität/Aktivität zu einer niedrigeren 8K Diol Viskosität führt.

Allgemeine Durchführung:

In einem 1 Liter Edelstahlreaktor wurden 75 g eines bifunktionellen Polypropylenglykol-Starters (OH-Zahl = 147 mg KOH/g) und 30,7 mg DMC-Katalysator vorgelegt. Nach 5-maligem Stickstoff/Vakuum-Austausch zwischen 0,1 und 3,0 bar (absolut) wurde der Reaktorinhalt unter Rühren (800 U/min) auf 130°C aufgeheizt. Das Gemisch wurde dann 30 min bei 130°C und 100 mbar (absolut) mit Stickstoff gestrippt. Anschließend wurden bei 130°C und 100 mbar (absolut) 7,5 g Propylenoxid zur Aktivierung des Katalysators zugegeben. Die Katalysatoraktivierung äußerte sich in einem beschleunigten Druckabfall im Reaktor. Nach erfolgter Katalysatoraktivierung wurde das restliche Propylenoxid (685,7 g) innerhalb von 30 min bei 130°C unter Rühren (800 U/min) zudosiert. Nach einer Nachreaktionszeit von 30 min bei 130°C wurden flüchtige Bestandteile im Vakuum (< 10 mbar) bei 90°C für 30 min abdestilliert. Das Produkt wurde dann auf Raumtemperatur abgekühlt und dem Reaktor entnommen. Vom erhaltenen Produkt wurden OH-Zahl und Viskosität (25°C) gemessen. Im Falle eines Abweichens der gemessenen von der berechneten OH-Zahl (14 mg KOH/g) wurde aus der gemessenen Viskosität mit der folgenden Formel eine "korrigierte Viskosität" ermittelt:

$$\text{korrigierte Viskosität (25°C)} = \text{gemessene Viskosität (25°C)} + 659 * (\text{OHZ} - 14)$$

Die Ergebnisse der Katalysator-Testungen im "8K Diol Stressed Test" sind in Tabelle 1 zusammengefasst.

Tabelle 1:

| Katalysator-Testung / Beispiel | DMC-Katalysator / Beispiel | Druck am Strahldisp. [p] | Temperatur [°C] | OH-Zahl [mg KOH/g] | Viskosität 25°C / gemessen [mPas] | Viskosität 25°C / korrigiert [mPas] |
|---|---|---|---|---|---|---|
| 14 (Vgl.) | 1 (Vgl.) | 2,9 | 25 | 13,6 | 4595 | 4331 |
| 15 | 2 | 2,9 | 30 | 13,8 | 4125 | 3993 |
| 16 | 3 | 2,9 | 35 | 13,8 | 4305 | 4173 |
| 17 | 4 | 2,9 | 40 | 13,8 | 4310 | 4178 |
| 18 (Vgl.) | 5 (Vgl.) | 2,9 | 50 | 13,8 | 4525 | 4393 |
| 19 (Vgl.) | 6 (Vgl.) | 2,9 | 70 | 13,8 | 5305 | 5173 |
| 20 (Vgl.) | 7 (Vgl.) | 5,0 | 25 | 13,9 | 4500 | 4434 |

(fortgesetzt)

| Katalysator-Testung / Beispiel | DMC-Katalysator / Beispiel | Druck am Strahldisp. [p] | Temperatur [°C] | OH-Zahl [mg KOH/g] | Viskosität 25°C / gemessen [mPas] | Viskosität 25°C / korrigiert [mPas] |
|---|---|---|---|---|---|---|
| 21 | 8 | 5,0 | 30 | 13,9 | 4190 | 4124 |
| 22 | 9 | 5,0 | 35 | 13,9 | 4120 | 4054 |
| 23 | 10 | 5,0 | 40 | 13,7 | 4495 | 4297 |
| 24 (Vgl.) | 11 (Vgl.) | 5,0 | 50 | 13,7 | 4610 | 4412 |
| 25 (Vgl.) | 12 (Vgl.) | 5,0 | 70 | 13,7 | 5385 | 5187 |
| 26 (Vgl.) | 13 (Vgl.) * | 2,9 | 35 | 13,9 | 5895 | 5829 |
| * Cholsäure-Natriumsalz anstelle von Polypropylenglykol 1000 als komplexbildende Komponente | | | | | | |

Die Ergebnisse zeigen, das sowohl bei einem Druckverlust im Strahldispergator von 2,9 bar als auch bei 5,0 bar die niedrigsten Viskositätswerte (korrigiert) im "8K Diol Stressed Test" dann erhalten werden, wenn die Temperatur bei der Herstellung der DMC-Dispersion bei 30 - 40°C liegt.

Außerdem zeigt sich, dass eine deutlich höhere Viskosität (korrigiert) erhalten wird, wenn bei der Herstellung des DMC-Katalysators die komplexbildende Komponente Polypropylenglykol 1000 durch Cholsäure-Natriumsalz ersetzt wird.

## Patentansprüche

1.  Verfahren zur Herstellung eines Doppelmetallcyanid-Katalysators (DMC) umfassend

    i) in einem ersten Schritt die Umsetzung einer wässrigen Lösung eines cyanidfreien Metallsalzes, einer wässrigen Lösung eines Metallcyanidsalzes, eines organischen Komplexliganden sowie einer komplexbildenden Komponente unter Bildung einer Dispersion;

    wobei die komplexbildende Komponente ein Polyether ist;
    wobei die Umsetzung unter Einsatz einer Mischdüse erfolgt;
    und wobei die Prozesstemperatur der Dispersion bei der Umsetzung zwischen 26°C und 49°C ist.

2.  Verfahren gemäß Anspruch 1, wobei die Mischdüse ein Strahldispergator ist.

3.  Verfahren gemäß Anspruch 2, wobei der Druckverlust im Strahldispergator 0,1 bis 100 bar, bevorzugt 1 bis 50 bar und besonders bevorzugt 2 bis 30 bar beträgt.

4.  Verfahren gemäß einem der Ansprüche 1 bis 3, wobei der Polyether ein zahlenmittleres Molekulargewicht von $\geq$ 500 g/mol aufweist, wobei das zahlenmittlere Molekulargewicht aus der ermittelten OH-Zahl berechnet wird.

5.  Verfahren gemäß Anspruch 4, wobei der Polyether ein Polyetherpolyol ist.

6.  Verfahren gemäß Anspruch 5, wobei das Polyetherpolyol ein Poly(oxypropylen)polyol mit einem zahlenmittleren Molekulargewicht von $\geq$ 500 g/mol ist, wobei das zahlenmittlere Molekulargewicht aus der ermittelten OH-Zahl berechnet wird.

7.  Verfahren gemäß Anspruch 6, wobei das Poly(oxypropylen)polyol ein Poly(oxypropylen)diol und/oder ein Poly(oxypropylen)triol mit einem zahlenmittleren Molekulargewicht von 700 g/mol bis 4000 g/mol ist, wobei das zahlenmittlere Molekulargewicht aus der ermittelten OH-Zahl berechnet wird.

8.  Verfahren gemäß einem der Ansprüche 1 bis 7, wobei die Prozesstemperatur in Schritt i) 28 °C bis 47 °C, bevorzugt 29 °C bis 42 °C und besonders bevorzugt 30 °C bis 40 °C ist.

**9.** Verfahren gemäß einem der Ansprüche 1 bis 8, wobei
(ii) in einem zweiten Schritt der Feststoff aus der aus (i) erhaltenen Dispersion abgetrennt wird.

**10.** Verfahren gemäß einem der Ansprüche 1 bis 9, wobei
(iii) in einem dritten Schritt der isolierte Feststoff mit einer wässrigen Lösung eines organischen Komplexliganden mittels einer Filterkuchenwäsche gewaschen wird.

**11.** Verfahren gemäß einem der Ansprüche 1 bis 10, wobei
(iv) in einem vierten Schritt der erhaltene Feststoff getrocknet wird.

**12.** Verfahren gemäß einem der Ansprüche 9 und 10, wobei die Schritte (ii) und (iii) in einer Filterpresse erfolgen.

**13.** Verfahren gemäß einem der Ansprüche 9 bis 11, wobei die Schritte (ii), (iii) und (iv) in einer beheizbaren Filterpresse erfolgen.

**14.** Doppelmetallcyanid-Katalysator (DMC) erhältlich nach einem der Ansprüche 1 bis 13.

**15.** Verwendung eines Doppelmetallcyanid-Katalysators (DMC) gemäß einem der Ansprüche 1 bis 13 zur Herstellung von Polyoxyalkylenpolyolen, bevorzugt Polyetherpolyolen und/oder Polyethercarbonatpolyolen.

**Claims**

**1.** Process for preparing a double metal cyanide catalyst (DMC) comprising

1) in a first step, the reaction of an aqueous solution of a cyanide-free metal salt, an aqueous solution of a metal cyanide salt, an organic complex ligand and a complex-forming component, to form a dispersion;

wherein the complex-forming component is a polyether; wherein the reaction is effected using a mixing nozzle; and wherein the process temperature of the dispersion during the reaction is between 26°C and 49°C.

**2.** Process according to Claim 1, wherein the mixing nozzle is a jet disperser.

**3.** Process according to Claim 2, wherein the pressure drop in the jet disperser is 0.1 to 100 bar, preferably 1 to 50 bar and particularly preferably 2 to 30 bar.

**4.** Process according to any of Claims 1 to 3, wherein the polyether has a number-average molecular weight of $\geq 500$ g/mol, the number-average molecular weight being calculated from the OH number determined.

**5.** Process according to Claim 4, wherein the polyether is a polyether polyol.

**6.** Process according to Claim 5, wherein the polyether polyol is a poly(oxypropylene) polyol having a number-average molecular weight of $\geq 500$ g/mol, the number-average molecular weight being calculated from the OH number determined.

**7.** Process according to Claim 6, wherein the poly(oxypropylene) polyol is a poly(oxypropylene) diol and/or a poly(oxypropylene) triol having a number-average molecular weight of 700 g/mol to 4000 g/mol, the number-average molecular weight being calculated from the OH number determined.

**8.** Process according to any of Claims 1 to 7, wherein the process temperature in step i) is 28°C to 47°C, preferably 29°C to 42°C and particularly preferably 30°C to 40°C.

**9.** Process according to any of Claims 1 to 8, wherein (ii) in a second step, the solid is separated off from the dispersion obtained from (i).

**10.** Process according to any of Claims 1 to 9, wherein (iii) in a third step, the isolated solid is washed with an aqueous solution of an organic complex ligand by means of a filtercake washing operation.

**11.** Process according to any of Claims 1 to 10, wherein (iv) in a fourth step, the solid obtained is dried.

**12.** Process according to either of Claims 9 and 10, wherein steps (ii) and (iii) are performed in a filter press.

**13.** Process according to any of Claims 9 to 11, wherein steps (ii), (iii) and (iv) are performed in a heatable filter press.

**14.** Double metal cyanide catalyst (DMC) obtainable in accordance with any of Claims 1 to 13.

**15.** Use of a double metal cyanide catalyst (DMC) according to any of Claims 1 to 13 for the preparation of polyoxyalkylene polyols, preferably polyether polyols and/or polyethercarbonate polyols.


**Revendications**

**1.** Procédé de préparation d'un catalyseur de cyanure métallique double (DMC) comprenant

i) dans une première étape, la transformation d'une solution aqueuse d'un sel métallique exempt de cyanure, d'une solution aqueuse d'un sel de cyanure métallique, d'un ligand complexe organique ainsi que d'un composant complexant avec formation d'une dispersion ;

le composant complexant étant un polyéther ;
la transformation ayant lieu avec utilisation d'une buse de mélange ;
et la température de procédé de la dispersion lors de la transformation étant située entre 26°C et 49°C.

**2.** Procédé selon la revendication 1, la buse de mélange étant un appareil de dispersion à jet.

**3.** Procédé selon la revendication 2, la perte de charge dans l'appareil de dispersion à jet étant de 0,1 à 100 bars, de préférence de 1 à 50 bars et de manière particulièrement préférée de 2 à 30 bars.

**4.** Procédé selon l'une des revendications 1 à 3, le polyéther présentant un poids moléculaire moyen en nombre $\geq$ 500 g/mole, le poids moléculaire moyen en nombre étant calculé à partir de l'indice d'OH déterminé.

**5.** Procédé selon la revendication 4, le polyéther étant un polyétherpolyol.

**6.** Procédé selon la revendication 5, le polyétherpolyol étant un poly(oxypropylène)polyol présentant un poids moléculaire moyen en nombre $\geq$ 500 g/mole, le poids moléculaire moyen en nombre étant calculé à partir de l'indice d'OH déterminé.

**7.** Procédé selon la revendication 6, le poly(oxypropylène)polyol étant un poly(oxypropylène)diol et/ou un poly(oxypropylène)triol présentant un poids moléculaire moyen en nombre de 700 g/mole à 4000 g/mole, le poids moléculaire moyen en nombre étant calculé à partir de l'indice d'OH déterminé.

**8.** Procédé selon l'une des revendications 1 à 7, la température de procédé dans l'étape i) étant de 28°C à 47°C, de préférence de 29°C à 42°C et de manière particulièrement préférée de 30°C à 40°C.

**9.** Procédé selon l'une des revendications 1 à 8, dans lequel
(ii) dans une deuxième étape, le solide est séparé de la dispersion obtenue dans (i).

**10.** Procédé selon l'une des revendications 1 à 9, dans lequel
(iii) dans une troisième étape, le solide isolé est lavé avec une solution aqueuse d'un ligand complexe organique au moyen d'un lavage de gâteau de filtre.

**11.** Procédé selon l'une des revendications 1 à 10, dans lequel
(iv) dans une quatrième étape, le solide obtenu est séché.

**12.** Procédé selon l'une des revendications 9 et 10, les étapes (ii) et (iii) ayant lieu dans un filtre-presse.

**13.** Procédé selon l'une des revendications 9 à 11, les étapes (ii), (iii) et (iv) ayant lieu dans un filtre-presse pouvant être chauffé.

**14.** Catalyseur de cyanure métallique double (DMC) pouvant être obtenu selon l'une des revendications 1 à 13.

**15.** Utilisation d'un catalyseur de cyanure métallique double (DMC) selon l'une des revendications 1 à 13 pour la préparation de polyoxyalkylènepolyols, de préférence de polyétherpolyols et/ou de polyéthercarbonatepolyols.

Fig.1

Fig.2

Fig.3

18

Fig.4

Fig.5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3404109 A
- US 3829505 A
- US 3941849 A
- US 5158922 A
- US 5470813 A
- EP 700949 A
- EP 743093 A
- EP 761708 A
- WO 9740086 A

- WO 9816310 A
- WO 0047649 A
- WO 0139883 A1
- WO 0180994 A1
- WO 2011144523 A1
- EP 700949 A2
- WO 9816310 A1
- JP 4145123 B

**In der Beschreibung aufgeführte Nicht-Patentliteratur**

- Ullmann's Encyclopedia of Industrial Chemistry. VCH, 1988, vol. B 2

- Handbuch der industriellen Fest/Flüssig-Filtration. Wiley-VCH Verlag GmbH, 2000